# DEMANDE DE BREVET EUROPEEN

(11) **EP 1 621 092 A1**
(43) Date de publication de la demande: **01.02.2006**
(21) Numéro de dépôt: 05008971.3
(22) Date de dépôt: 23.04.2005
(51) Int. Cl.: A43B 23/02, B29D 31/518

(54) **Elément de confort pour article d'habillement ou article chaussant, procédé de fabrication et article comportant un tel élément**

(30) Priorité: 26.07.2004 FR 0408249
(71) Demandeur: Salomon S.A., 74370 Metz-Tessy (FR)
(72) Inventeur: Challe, Jean-Michel, 74150 Rumilly (FR)

(57) **Abrégé**

Procédé de fabrication d'un élément de confort, caractérisé en ce qu'il consiste à superposer :
- une première couche (11) de matériau ayant une température de fusion θ1,
- une couche (12) de matériau mousse ayant une température de fusion θ2,
- une seconde couche (13) de matériau ayant une température de fusion θ3, la température θ2 étant inférieure à θ1 et θ3,
et à assembler les trois couches ensembles selon des lignes de soudure prédéterminées par une opération de soudage portant la couche de matériau mousse à une température θ4 comprise entre θ2 et θ1, θ3 selon lesdites lignes de soudure.

Le procédé de fabrication est caractérisé en ce qu'au moins un film (14, 15) de colle thermofusible prédécoupé selon les lignes de soudure prédéterminées et ayant une température de fusion θ5 de l'ordre de θ2 est interposé entre l'une des couches de matériau (11, 13) et la couche de matériau mousse (12).

## Description

La présente invention a pour objet un élément de confort pour article d'habillement ou article chaussant ainsi qu'un article d'habillement ou chaussant comportant un tel élément de confort.

Les articles chaussants comportent très souvent des éléments de confort, soit directement intégrés à l'intérieur de la tige de la chaussure, soit intégrés dans un chausson de confort généralement monobloc, par exemple dans le cas d'une chaussure de ski alpin ou de snowboard.

Selon le type de chaussure, de tels éléments de confort sont plus ou moins nécessaires dans les zones destinées à être en contact avec des zones sensibles du pied, par exemple, mais non limitativement la zone de cou de pied, la zone du talon, la zone des malléoles au niveau de la cheville.....

Certains articles d'habillement comportent également de tels éléments de confort, par exemple les cuissards utilisés en cyclisme, ou encore les éléments de protection tels que genouillères, protège tibia.......etc., ou encore des articles destinés à être portés tels que harnais de sécurité ou baudrier.

Généralement les éléments de confort utilisés dans de tels articles sont constitués par des ensembles complexés mousse / textile dans lesquels des volumes de confort sont plus ou moins déterminés par des coutures. Ces coutures sont apparentes et sont donc soumises à l'usure, elles peuvent également être source d'inconfort pour l'utilisateur. Par ailleurs, les manipulations liées aux opérations de couture peut générer un manque de reproductibilité et de qualité des éléments de confort.

Plus récemment il a été proposé de former de tels éléments à partir de laminés, c'est-à-dire de matériaux composites réunissant plusieurs couches de mousse, textiles contrecollés ensemble sur toute leur surface, qui sont mis en forme par thermoformage. De tels éléments sont décrits par exemple dans le US 6 670 029.

L'inconvénient d'une telle technologie est que les couches de colle reliant les différentes couches du laminé peuvent affecter de façon importante la respirabilité de l'ensemble.

Par ailleurs une telle technologie est peu flexible puisque l'emploi de matériaux textile laminés suppose de grandes quantités.

La présente invention a pour but de proposer une nouvelle conception d'éléments de confort pour articles d'habillement et / ou article chaussant.

Un but de la présente invention est notamment de proposer des éléments de confort qui ne soient pas soumis aux inconvénients de la technique antérieure.

Un autre but de la présente invention est de proposer un procédé de fabrication d'éléments de confort qui soit reproductible, et compatible avec la fabrication en petites quantités.

Un autre but de la présente invention est également de proposer un élément de confort perfectionné.

Ce ou ces buts sont atteints dans le procédé de fabrication d'un élément de confort selon l'invention selon l'invention par le fait qu'il consistera superposer:
- une première couche de matériau ayant une température de fusion θ1,
- une couche de matériau mousse ayant une température de fusion θ2,
- une seconde couche de matériau ayant une température de fusion θ3, la température θ2 étant inférieure à θ1 et θ3,
et à assembler les trois couches ensembles selon des lignes de soudure prédéterminées par une opération de soudage portant la couche de matériau mousse à une température θ4 comprise entre θ2 et θ1, θ3 selon lesdites lignes de soudure.

Le procédé de soudage utilisé permet de souder ensemble les deux couches de matériau par la simple fusion de la couche de mousse qui fait alors office de colle, sous l'effet de la soudure, selon les seules lignes de soudure prédéterminées de l'électrode de soudage. De ce fait les zones situées entre les lignes de soudure, non sollicitées par l'électrode, conservent leur volume et confèrent à l'élément de confort l'aspect matelassé souhaité. Selon un mode de réalisation le procédé de soudage est un procédé de soudage haute fréquence, qui permet un soudage très rapide car directement à coeur.

Selon un autre aspect de l'invention, au moins un film de colle thermofusible prédécoupé selon les lignes de soudure prédéterminées et ayant une température de fusion θ5 de l'ordre de θ2 est interposé entre l'une des couches de matériau textile et la couche de matériau mousse. L'ajout d'un film de colle thermofusible renforce le collage et donc la stabilité de l'élément de confort, sans cependant porter préjudice à la respirabilité de l'ensemble puisque le film de colle est prédécoupé selon les lignes de soudure de l'électrode.

De toute façon l'invention sera mieux comprise et d'autres caractéristiques et avantages de celle-ci seront mises en évidence à l'aide de la description qui suit en référence au dessin schématique annexé dans lequel :
- la figure 1 est une vue en perspective éclatée des différentes couches de l'élément de confort avant assemblage,
- la figure 2 est une vue de dessous de l'élément de confort une fois terminé,
- la figure 3 est une vue de dessus de l'élément de confort une fois terminé,
- la figure 4 est une vue en perspective avec arraché illustrant différentes possibilités d'utilisation d'un élément de confort selon l'invention.

L'élément de confort 10 représenté à titre d'exemple non limitatif sur les différentes figures du dessin est une languette de chaussure. L'invention pourrait bien entendu être appliquée à tout autre élément de confort et notamment à d'autres éléments de confort d'une tige de chaussure, ou élément de protection pour cuissard, protège genou, protège tibia.....etc.

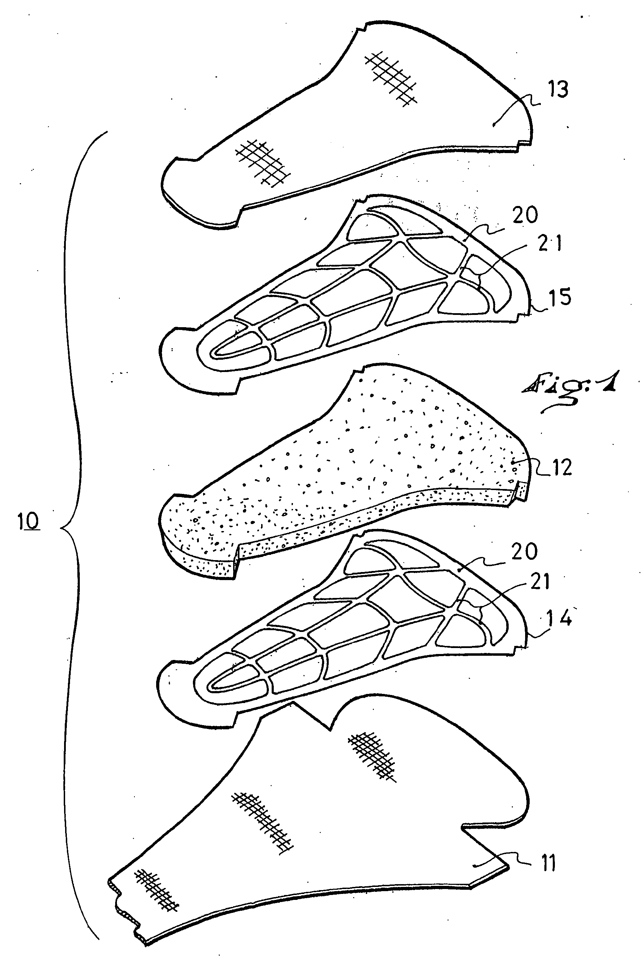

Ainsi que le montre particulièrement la figure 1, cet élément de confort 10 est constitué essentiellement de trois couches, à savoir une première couche externe 11, destinée à être tournée vers l'extérieur, une couche de matériau mousse 12 et une seconde couche externe 13 destinée à être tournée vers l'intérieur de l'article chaussant ou vêtement. Bien entendu ces deux couches 11, 13 peuvent être inversées.

La première couche 11, de même que la seconde couche 13 est en un matériau de type textile tel qu'un tissu polyamide ou polyester, c'est-à-dire un matériau ayant une température de fusion respectivement θ1, θ3 relativement élevée et en l'occurrence comprise entre 220° et 260° C.

La couche de matériau mousse 12 est un matériau thermofusible tel qu'une mousse de polyuréthanne ayant une température de fusion θ2 inférieure à celles respectivement θ1, θ3 de la première et seconde couches, et en l'occurrence de l'ordre de 200°C. La couche de mousse pourrait également être en polyéthylène, polypropylène, PVC ou polystyrène.

Des films de colle prédécoupés 14, 15 peuvent être interposés entre la couche de mousse 12 et chacune des première et seconde couches respectivement 11, 13. Ces films de colle 14, 15 sont par exemple des films de polyuréthanne ayant une température de fusion θ5 similaire à celle de la couche de mousse 12 ou du moins d'ordre de grandeur équivalent. D'autres matériaux tels que polyéthylène, polyéthylène, polypropylène, PVC, ou polyamide peuvent être utilisés.

Les films de colle 14, 15 quand ils sont utilisés ont une découpe correspondant à celle de l'électrode de la mâchoire de soudage haute fréquence (non représentée sur le dessin). Cette découpe détermine un bord périmétrique 20 correspondant au pourtour de la couche de matériau textile la plus petite, en l'occurrence la seconde couche 13 dans l'exemple représenté, ainsi que des lignes de jonction 21 qui définiront les zones de soudure ou creux de l'élément de confort une fois terminé.

Le procédé de fabrication de l'élément de confort 10 est très simple, les différentes couches 11, 12, 13 sont empilées en un pré-ensemble, éventuellement avec interposition des couches de colle 14, 15 et sont disposées entre la platine et l'électrode d'une machine de soudage haute fréquence (non représentée sur le dessin).

L'électrode a une découpe similaire à celle des films de colle 14, 15 et comporte donc également un bord périmétrique et des lignes de jonction similaires au bord 20 et lignes 21 de ces films de colle.

L'électrode est abaissée en direction de la platine de façon à écraser la couche de mousse 12 jusqu'à une épaisseur très faible de l'ordre du 1/10^{ème} de mm.

Un champ électrique haute fréquence est ensuite appliqué entre l'électrode et la platine, ce champ provoque un échauffement interne de la matière disposée entre l'électrode et la platine jusqu'à une température θ4 de l'ordre de 220°C et donc supérieure à la température de fusion θ2 de la mousse, tout en étant bien entendu inférieure aux températures de fusion θ1 et θ3 des couches externes de l'élément de façon à ne pas endommager les matériaux les constituant, et vient donc fondre complètement la couche de mousse au niveau des lignes 20, 21 de l'électrode.

En fondant la mousse PU vient coller les couches de tissu externes 11 et 13.

Si des films de colle PU 14, 15 sont interposés, ces films de colle fondent également en se mêlant à la mousse et viennent parfaire l'assemblage entre les deux couches externes 11, 13.

Une fois la mousse PU et les films de colle fondus, le champ électrique haute fréquence est interrompu, tout en maintenant l'électrode abaissée de façon à maintenir la pression sur la mousse, jusqu'à un refroidissement à une température inférieure à celle de fusion de la mousse PU, et de l'ordre de 180°C.

Le cycle total peut être très court en fonction des matériaux utilisés. Afin d'optimiser encore la durée de celui-ci, l'électrode et / ou la platine peuvent être préchauffées à une température de l'ordre de 100°C qui n'endommage pas les couches de tissu 11, 13, ni la couche de mousse PU.

En préchauffant la platine et l'électrode, la durée totale du cycle peut être réduit à quelques secondes.

L'élément de confort 10 terminé se présente alors sous la forme d'un élément matelassé, ayant seulement l'épaisseur des deux couches externes 11 et 13 au niveau des lignes de soudure 120, 121 correspondant respectivement aux lignes de découpes 20, 21 des films de colle ou de l'électrode, et ayant conservé quasiment toute l'épaisseur de la couche de mousse entre ces dites lignes.

Cet élément de confort 10 est obtenu sans couture et est donc particulièrement confortable à porter et peu sensible à l'usure.

Par ailleurs, l'absence ou la faible présence de colle, permet de garantir une respirabilité optimum d'un tel élément de confort, ce qui est particulièrement appréciable pour une utilisation dans des articles chaussants et / ou des articles d'habillement.

L'apport minimum de colle permet également de réduire le poids et de conférer une souplesse particulièrement agréable à l'élément de confort, puisqu'il n'y a pas d'effet de raideur lié à une construction de type lamellé / collé ou laminé usuelle.

Ce procédé de fabrication est également compatible avec la prévision d'une couche externe 11 étanche, ou rendue étanche et / ou respiro étanche par l'interposition d'un film de type PTFE ou d'une enduction PU.

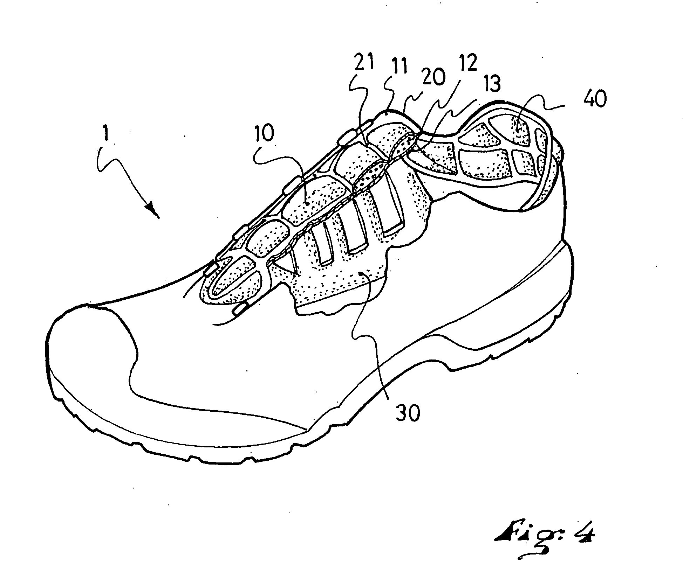

La figure 4 illustre l'application d'un élément de confort selon l'invention à différents endroits d'une chaussure.

Dans l'exemple représenté, la chaussure 1 est une chaussure de type basse, c'est-à-dire qu'elle ne s'étend pas en hauteur au-delà des malléoles d'un utilisateur.

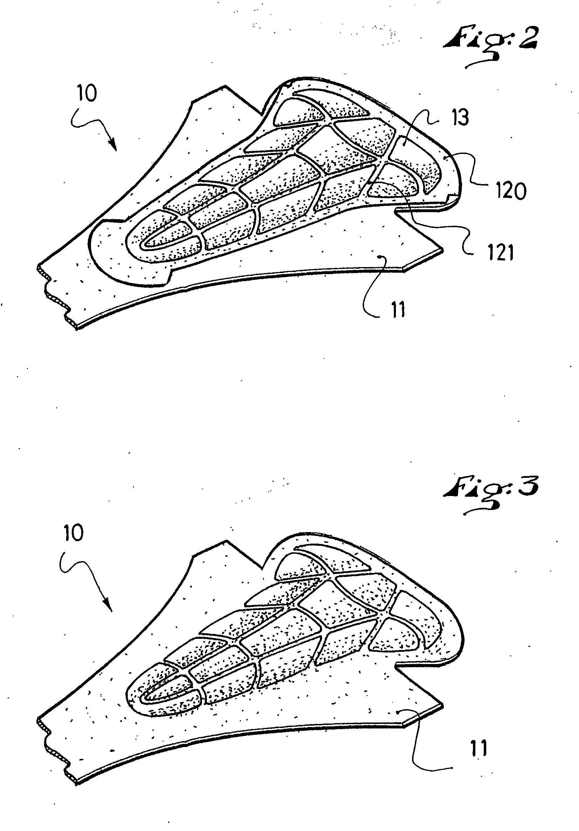

Cette chaussure 1 comporte en languette 10, un élément de confort tel que décrit précédemment en liaison avec les figures 1 à 3. Cette languette 10 est coupée longitudinalement et montre bien la présence de la couche de mousse 12 dans les zones en dehors des lignes de soudure ou de jonction 21 et l'absence de mousse au niveau desdites lignes de jonction 21.

Par ailleurs la chaussure 1 comporte un élément de confort 30 similaire au niveau de sa zone de serrage du cou de pied et un élément de confort 40 disposé à l'arrière au niveau du talon.

Bien entendu la présente invention n'est pas limitée aux modes de réalisation décrits mais en englobe tous les modes de réalisation similaires ou équivalents.

Elle s'applique à tout type d'élément de confort dans des chaussures hautes ou basses et tout type d'article d'habillement.

Elle n'est pas non plus limitée à l'utilisation des matériaux cités ci-avant à titre d'exemples non limitatifs, ni au type de soudure décrit. En effet d'autres modes de soudure peuvent être envisagés dans la mesure où ils n'échauffent que localement le matériau mousse, et par exemple la soudure thermique à l'aide d'un poinçon chauffant ayant une forme /découpe appropriée.

Par ailleurs ce procédé peut également être utilisé pour mettre en forme simultanément l'élément de confort en utilisant un outil inférieur (platine) non plan mais ayant une forme tridimensionnelle appropriée.

## Revendications

1. Procédé de fabrication d'un élément de confort, **caractérisé en ce qu'**il consiste à superposer :
- une première couche (11) de matériau ayant une température de fusion θ1,
- une couche (12) de matériau mousse ayant une température de fusion θ2,
- une seconde couche (13) de matériau ayant une température de fusion θ3, la température θ2 étant inférieure à θ1 et θ3,
et à assembler les trois couches ensembles selon des lignes de soudure prédéterminées par une opération de soudage portant la couche de matériau mousse à une température θ4 comprise entre θ2 et θ1, θ3 selon lesdites lignes de soudure.

2. Procédé de fabrication selon la revendication 1, **caractérisé en ce qu'**au moins un film (14, 15) de colle thermofusible prédécoupé selon les lignes de soudure prédéterminées et ayant une température de fusion θ5 de l'ordre de θ2 est interposé entre l'une des couches de matériau (11, 13) et la couche de matériau mousse (12).

3. Procédé de fabrication selon la revendication 3, **caractérisé en ce que** la machine de soudage comporte une électrode de soudage ayant une découpe similaire à celle d'un film de colle (14, 15).

4. Procédé de fabrication selon l'une des revendications 1 à 3, **caractérisé en ce que** l'opération de soudage est effectuée sous une pression suffisante pour écraser la couche de matériau mousse.

5. Procédé de fabrication selon la revendication 4, **caractérisé en ce que** la pression est maintenue jusqu'à refroidissement de l'ensemble à une température inférieure à θ2.

6. Procédé de fabrication selon l'une des revendications 1 à 6, **caractérisé en ce que** la machine de soudage est une machine de soudage haute fréquence.

7. Elément de confort, **caractérisé en ce qu'**il comporte :
- une première couche (11) de matériau ayant une température de fusion θ1,
- une couche (12) de matériau mousse ayant une température de fusion θ2,
- une seconde couche (13) de matériau ayant une température de fusion θ3, la température θ2 étant inférieure à θ1 et θ3,
les trois couches étant assemblées par une opération de soudage portant la couche de matériau mousse à une température θ4 comprise entre θ2 et θ1, θ3 selon des lignes de soudage prédéterminées.

8. Elément de confort selon la revendication 7, **caractérisé en ce que** la première et la seconde couches de matériau sont en tissu polyamide ou polyester.

9. Elément de confort selon la revendication 8, **caractérisé en ce que** l'une des première et seconde couches est en un matériau revêtu d'un film ou d'une enduction respiro étanche.

10. Elément de confort selon l'une des revendications 7 à 9, **caractérisé en ce que** la mousse est une mousse PU.

11. Elément de confort selon l'une des revendications 7 à 10, **caractérisé en ce que** le film de colle thermofusible est un film de colle PU.

12. Elément de confort **caractérisé en ce qu'**il est obtenu à l'aide du procédé selon l'une quelconque des revendications 1 à 6.

13. Article d'habillement, **caractérisé en ce qu'**il comporte un élément de confort selon l'une quelconque des revendications 7 à 12.

14. Article chaussant, **caractérisé en ce qu'**il comporte un élément de confort selon l'une quelconque des revendications 7 à 12.
